# EUROPEAN PATENT APPLICATION

(11) **EP 4 582 509 A1**
(43) Date of publication of application: **09.07.2025**
(21) Application number: 23860243.7
(22) Date of filing: 28.08.2023
(51) Int. Cl.: C09K 15/20, C07D 307/14, C08G 59/50, C08K 5/13, C08K 5/17, C08L 63/00, C08L 101/00

(54) **COMPOSITION, RESIN COMPOSITION, AND CURED PRODUCT**

(30) Priority: 02.09.2022 JP 2022139649
(71) Applicant: MITSUBISHI GAS CHEMICAL COMPANY, INC., Chiyoda-ku Tokyo 100-8324 (JP)
(72) Inventor: ASAI Ryo, Tokyo 125-8601 (JP); KITAMURA Mitsuharu, Tokyo 125-8601 (JP)
(74) Representative: Müller-Boré & Partner Patentanwälte PartG mbB
(86) International application number: PCT/JP2023/030852
(87) International publication number: WO 2024/048481

(57) **Abstract**

To provide a composition, and a resin composition and a cured product obtained using the composition. A composition containing: a compound containing an amino group and a cyclic ether structure and having a molecular weight of 1000 or less; and a less hindered phenolic antioxidant.

## Description

### Technical Field

The present invention relates to a composition, a resin composition, and a cured product.

### Background Art

Low-molecular-weight compounds containing an amino group and a cyclic ether structure, such as 2,5-bis(aminomethyl)tetrahydrofuran, are widely used as a curing agent for thermosetting resins, such as epoxy resins; a raw material for polyamide resins; and the like (Patent Documents 1 and 2).

On the other hand, a low-molecular-weight diamine compound is known to have drawbacks, such as being easily colored by air oxidation, coloring during production, and progress of coloring during storage, leading to drawbacks, such as limiting the use for materials for which transparency is required (Patent Document 3).

### Citation List

### Patent Document

Patent Document 1: WO 2020/153280
Patent Document 2: JP 2021-091816 A
Patent Document 3: JP 2015-010080 A

### Summary of Invention

### Technical Problem

Here, studies conducted by the present inventor have found that blending a low-molecular-weight compound containing an amino group and a cyclic ether structure with pentaerythritol tetrakis[3-(3,5-di-tert-butyl-4-hydroxyphenyl) propionate], which is a widely used hindered phenolic antioxidant, and subjecting the blend to heat treatment causes yellowing and fails to achieve a sufficient antioxidant effect.

An object of the present invention is to solve such issues and to provide a composition containing a low-molecular-weight compound containing an amino group and a cyclic ether structure, and an antioxidant, in which yellowing after heat treatment is prevented, and a resin composition and cured product obtained using the composition.

### Solution to Problem

The present inventor has conducted studies to solve the above issues and as a result, found that these issues can be solved by blending a low-molecular-weight compound containing an amino group and a cyclic ether structure with a less hindered phenolic antioxidant.

Specifically, the issues have been solved by the following means.
<1> A composition containing:
   a compound containing an amino group and a cyclic ether structure and having a molecular weight of 1000 or less; and
   a less hindered phenolic antioxidant.
<2> The composition according to <1>, in which the compound containing an amino group and a cyclic ether structure and having a molecular weight of 1000 or less is represented by Formula (F): 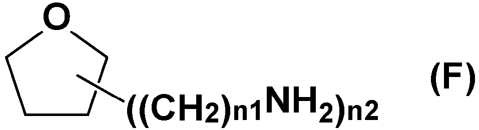 where in Formula (F), n1 represents an integer of 0 to 3, and n2 represents an integer of 1 to 4.
<3> The composition according to <1> or <2>, further containing a phosphorus-based antioxidant.
<4> The composition according to <3>, in which a mass ratio of the less hindered phenolic antioxidant to the phosphorus-based antioxidant (less hindered phenolic antioxidant/phosphorus-based antioxidant) is from 0.6 to 1.4.
<5> The composition according to any one of <1> to <4>, in which a content of the less hindered phenolic antioxidant is from 100 to 5000 mass ppm.
<6> The composition according to <1>, further containing a phosphorus-based antioxidant, in which
   a mass ratio of the less hindered phenolic antioxidant to the phosphorus-based antioxidant (less hindered phenolic antioxidant/phosphorus-based antioxidant) is from 0.6 to 1.4, and
   a content of the less hindered phenolic antioxidant is from 100 to 5000 mass ppm.
<7> A resin composition containing:
   the composition described in any one of <1> to <6>; and
   a thermosetting resin.
<8> The resin composition according to <7>, in which the thermosetting resin contains an epoxy resin.
<9> A cured product of the resin composition described in <7> or <8>.

### Advantageous Effects of Invention

The present invention has made it possible to provide a composition containing a low-molecular-weight compound containing an amino group and a cyclic ether structure, and an antioxidant, in which yellowing after heat treatment is prevented, and a resin composition and cured product obtained using the composition.

### Description of Embodiments

Hereinafter, embodiments for carrying out the present invention (hereinafter referred to simply as "the present embodiment") will be described in detail. The present embodiments described below are examples for describing the present invention, and the present invention is not limited only to the present embodiments.

In the present specification, "to" is used to mean including a numerical value described before "to" as the lower limit value and a numerical value after "to" as the upper limit value.

In the present specification, various physical property values and characteristic values are those at 23 °C unless otherwise noted.

In a description of a group (atomic group) in the present specification, a description not specifying whether the group is a substituted group or an unsubstituted group encompasses a group (atomic group) having a substituent as well as a group (atomic group) having no substituent. For example, an "alkyl group" encompasses not only an alkyl group having no substituent (unsubstituted alkyl group) but also an alkyl group having a substituent (substituted alkyl group). In the present specification, in a description not specifying whether the group is a substituted group or an unsubstituted group, the group is preferably an unsubstituted group.

In the present specification, weight average molecular weight and number average molecular weight are values calibrated with polystyrene measured by gel permeation chromatography (GPC) unless otherwise noted.

In a case where a measurement method described in a standard set forth in the present specification differs depending on the year, the method is based on the standard as of January 1, 2022 unless otherwise noted.

A composition of the present embodiment is characterized by containing:
a compound containing an amino group and a cyclic ether structure and having a molecular weight of 1000 or less (in the present specification, the compound may be referred to as "the low-molecular-weight compound containing an amino group and a cyclic ether structure"); and
a less hindered phenolic antioxidant. Such a configuration can effectively prevent yellowing after heat treatment.

To prevent oxidation of the amine compound, blending with an antioxidant has been carried out in the art. Thus, the present inventor has studied mainly an antioxidant effective for 1,3-bis(aminomethyl)cyclohexane (1,3-BAC) in studies of an antioxidant effective for preventing yellowing of the low-molecular-weight compound containing an amino group and a cyclic ether structure. However, desired results have not been achieved. Based on diligent studies, this is presumably because "the low-molecular-weight compound containing an amino group and a cyclic ether structure" is more likely to generate radicals and is more likely to be colored than 1,3-BAC. In addition, as a result of further studies, the present inventor has found that using a less hindered phenolic antioxidant can effectively prevent yellowing of "the low-molecular-weight compound containing an amino group and a cyclic ether structure". In particular, as shown in Examples described later, a less hindered phenolic antioxidant exhibits no effect on 1,3-BAC at all, but surprisingly, significantly prevents yellowing of "the low-molecular-weight compound containing an amino group and a cyclic ether structure".

### Compound Containing Amino Group and Cyclic Ether Structure and Having Molecular Weight of 1000 or Less

The composition of the present embodiment contains a compound containing an amino group and a cyclic ether structure and having a molecular weight of 1000 or less (low-molecular-weight compound containing an amino group and a cyclic ether structure).

In the present embodiment, the molecular weight of the low-molecular-weight compound containing an amino group and a cyclic ether structure is preferably 80 or more, more preferably 90 or more, even more preferably 100 or more, still more preferably 110 or more, yet more preferably 120 or more, and preferably 800 or less, more preferably 600 or less, even more preferably 400 or less, still more preferably 300 or less, yet more preferably 200 or less, still even more preferably 180 or less, particularly even more preferably 150 or less.

In the present embodiment, the low-molecular-weight compound containing an amino group and a cyclic ether structure preferably has from 1 to 4 amino groups per molecule, more preferably has from 2 to 4 amino groups, even more preferably has 2 or 4 amino groups, and still more preferably has 2 amino groups.

In the low-molecular-weight compound containing an amino group and a cyclic ether structure, the amino group may be directly bonded to the cyclic ether structure or may be bonded to the cyclic ether structure via a linking group. In the present embodiment, in the low-molecular-weight compound containing an amino group and a cyclic ether structure, the amino group is preferably bonded to the cyclic ether structure via a linking group, more preferably bonded via an aliphatic hydrocarbon group (preferably an aliphatic hydrocarbon group having from 1 to 5 carbons), and preferably bonded via an alkylene group (preferably an alkylene group having from 1 to 5 carbons). In addition, in the low-molecular-weight compound containing an amino group and a cyclic ether structure, a group other than the group having an amino group may be bonded to the cyclic ether structure. Examples of such a group other than the group having an amino group include a hydroxy group, an alkyl group (preferably an alkyl group having from 1 to 5 carbons), and a halogen atom.

The cyclic ether structure contained in the low-molecular-weight compound containing an amino group and a cyclic ether structure is preferably a 3-membered ring, a 4-membered ring, a 5-membered ring, or a 6-membered ring, more preferably a 5-membered ring or a 6-membered ring, and even more preferably a 5-membered ring. Specific examples of the cyclic ether structure contained in the low-molecular-weight compound containing an amino group and a cyclic ether structure include a pyran ring, a furan ring, an oxirane ring, an oxetane ring, a tetrahydropyran ring, and a tetrahydrofuran ring, and a tetrahydrofuran ring is preferred.

**In** the present embodiment, the low-molecular-weight compound containing an amino group and a cyclic ether structure is preferably represented by Formula (F): 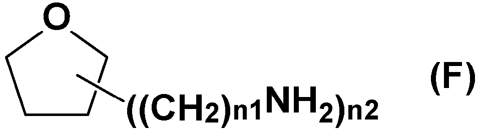 where in Formula (F), n1 represents an integer of 0 to 3, and n2 represents an integer of 1 to 4.

n1 is preferably an integer of 1 to 3, more preferably 1 or 2, and even more preferably 1.
n2 is preferably an integer of 2 to 4, more preferably 2 or 4, and even more preferably 2.

When n2 is an integer of 2 to 4, n1's may be identical to or different from each other but are preferably identical to each other.

The group represented by -((CH₂)ₙ₁NH₂)ₙ₂ is preferably bonded to at least one of the 2-position or the 5-position.

The compound represented by Formula (F) is preferably a compound represented by Formula (F1) (H-AMF):

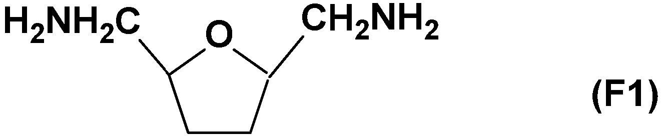

The composition of the present embodiment usually contains, as the main component, the low-molecular-weight compound containing an amino group and a cyclic ether structure, and the content of the low-molecular-weight compound containing an amino group and a cyclic ether structure in the composition is preferably from 95 mass% or more, more preferably 98 mass% or more, and even more preferably 99 mass% or more. The upper limit value of the low-molecular-weight compound containing an amino group and a cyclic ether structure in the composition of the present embodiment refers to a case where a component other than the less hindered phenolic antioxidant is only the low-molecular-weight compound containing an amino group and a cyclic ether structure.

**In** addition, the composition of the present embodiment may contain only one low-molecular-weight compound containing an amino group and a cyclic ether structure or may contain two or more low-molecular-weight compounds containing an amino group and a cyclic ether structure. **In** the composition containing two or more low-molecular-weight compounds containing an amino group and a cyclic ether structure, the total amount is preferably in the above ranges. In the present embodiment, 99 mass% or more of the low-molecular-weight compound containing an amino group and a cyclic ether structure contained in the composition is preferably the same compound.

### Less Hindered Phenolic Antioxidant

The composition of the present embodiment contains a less hindered phenolic antioxidant.

Examples of known phenolic antioxidants include hindered phenolic antioxidants in which hydrogen atoms at both ortho positions of the phenolic hydroxy group are replaced by sterically bulky groups; semi-hindered phenolic antioxidants in which a hydrogen atom at one ortho position of the phenolic hydroxy group is replaced by a sterically bulky group and a hydrogen atom at the other ortho position is replaced by a methyl group; and less hindered phenolic antioxidants in which a hydrogen atom at one ortho position of the phenolic hydroxy group is replaced by a sterically bulky group and a hydrogen atom at the other ortho position is not replaced. Among these, in the present embodiment, a less hindered phenolic antioxidant is used, and this can effectively prevent an increase in a YI value of the low-molecular-weight compound containing an amino group and a cyclic ether structure.

The sterically bulky group refers to, for example, a branched alkyl group other than a linear alkyl group or an aromatic ring group. Specific examples include a tertiary alkyl group, such as a t-butyl group, a t-pentyl group, and a t-hexyl group; a secondary alkyl group, such as an i-propyl group, a sec-butyl group, and a sec-pentyl group; a branched primary alkyl group, such as an i-butyl group and an i-pentyl group; a cycloalkyl group, such as a cyclohexyl group and a cyclopentyl group; and an aromatic ring group, such as a phenyl group, a benzyl group, and a naphthyl group.

In the present embodiment, the less hindered phenolic antioxidant is preferably a compound having the following partial structure, more preferably a compound having from 2 to 5 of the following partial structures, even more preferably a compound having from 2 to 4 of the following partial structures, and still more preferably a compound having 2 or 3 of the following partial structures.

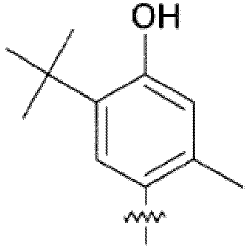

In the above partial structure, the wavy line is a bonding site with another moiety.

In the present embodiment, the molecular weight of the less hindered phenolic antioxidant is preferably 300 or more, and preferably 1000 or less and more preferably 800 or less.

Specific examples of the less hindered phenolic antioxidant include 4,4'-thiobis(3-methyl-6-t-butyl)phenol (e.g., Nocrac 300 available from Ouchi Shinko Chemical Industrial Co., Ltd.), 1,1,3-tris-(2-methyl-4-hydroxy-5-t-butylphenyl) butane (e.g., ADEKA STAB AO-30 available from ADEKA Corporation), and 4,4'-butylidenebis(3-methyl-6-t-butyl)phenol (e.g., ADEKA STAB AO-40 available from ADEKA Corporation).

The content of the less hindered phenolic antioxidant in the composition of the present embodiment is preferably 100 mass ppm or more, more preferably 200 mass ppm or more, even more preferably 300 mass ppm or more, still more preferably 400 mass ppm or more, yet more preferably 600 mass ppm or more, and still even more preferably 800 mass ppm or more when the composition is 100 parts by mass. Containing the less hindered phenolic antioxidant in an amount of the above lower limit value or more tends to enable the composition, a cured product obtained using the composition, or the like, to further reduce a YI value. In addition, the content of the less hindered phenolic antioxidant in the composition of the present embodiment is preferably 5000 mass ppm or less, more preferably 4000 mass ppm or less, even more preferably 3000 mass ppm or less, still more preferably 2500 mass ppm or less, yet more preferably 1900 mass ppm or less, and still even more preferably 1600 mass ppm or less when the composition is 100 parts by mass. Containing the less hindered phenolic antioxidant in an amount of the above upper limit value or less produces the composition with excellent economic efficiency while sufficiently maintaining an increasing effect on the YI value. Furthermore, this tends to enable the composition, a cured product obtained using the composition, or the like, to reduce the YI value.

The resin composition of the present embodiment may contain only one less hindered phenolic antioxidant or may contain two or more less hindered phenolic antioxidants. In the composition containing two or more less hindered phenolic antioxidants, the total amount is preferably in the above ranges.

The composition of the present embodiment may or may not contain a hindered phenolic antioxidant other than the less hindered phenolic antioxidant.

The composition of the present embodiment preferably does not substantially contain a hindered phenolic antioxidant other than the less hindered phenolic antioxidant. "Does not substantially contain" means that the content of a hindered phenolic antioxidant other than the less hindered phenolic antioxidant contained in the composition is 10 mass% or less, and the content is preferably 5 mass% or less, more preferably 3 mass% or less, and even more preferably 1 mass% or less, with respect to the content of the less hindered phenolic antioxidant.

### Phosphorus-Based Antioxidant

The composition of the present embodiment may contain a phosphorus-based antioxidant. Containing a phosphorus-based antioxidant can effectively prevent the increase in the YI value of the low-molecular-weight compound containing an amino group and a cyclic ether structure.

The phosphorus-based antioxidant is not particularly specified as long as it is an antioxidant containing a phosphorus atom.

Specific examples of the phosphorus-based antioxidant include a phosphorus oxoacid, such as phosphoric acid, phosphonic acid, phosphorous acid, phosphinic acid, and polyphosphoric acid; an acid pyrophosphate metal salt, such as sodium acid pyrophosphate, potassium acid pyrophosphate, and calcium acid pyrophosphate; a phosphate salt of group 1 or 2B metal, such as potassium phosphate, sodium phosphate, cesium phosphate, and zinc phosphate; a phosphate compound, a phosphite compound, and a phosphonite compound, and a phosphite compound is particularly preferred. Selecting a phosphite compound can produce a resin sheet with higher discoloration resistance and continuous productivity.

As for the phosphorus-based antioxidant, reference can be made to descriptions in paragraphs [0058] to [0064] of JP 2018-090677 A, the contents of which are incorporated in the present specification.

The phosphorus-based antioxidant used in the present embodiment preferably has an aromatic ring, more preferably has a di or triarylphosphite structure, and is even more preferably represented by Formula (P): 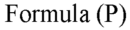 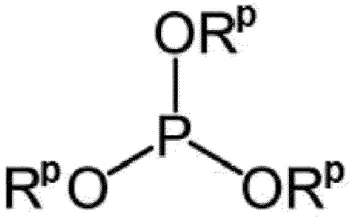 where in Formula (P), Rp's each independently represent an aryl group having 6 or more and 30 or less carbons.

Rp may be an aryl group having a substituent and is preferably an alkyl group-substituted aryl group. The aryl group is preferably a phenyl group. The alkyl group as the substituent is preferably an alkyl group having from 1 to 6 carbons, more preferably a butyl group, and even more preferably a t-butyl group.

Examples of the phosphorus-based antioxidant represented by Formula (P) include ADEKA STAB 2112, ADEKA STAB 1178, and ADEKA STAB TPP available from ADEKA Corporation. In addition, in the present embodiment, a phosphorus-based antioxidant having a pentaerythritol diphosphite structure can also be preferably used. Details of these are exemplified by compounds described in WO 2013/088796.

In the composition of the present embodiment containing a phosphorus-based antioxidant, its content is preferably 100 mass ppm or more, more preferably 300 mass ppm or more, even more preferably 700 mass ppm or more, and may be 1200 mass ppm or more per 100 parts by mass of the composition. Containing the phosphorus-based antioxidant in an amount of the above lower limit value or more tends to more effectively prevent the increase in the YI value of the composition or a cured product of a resin composition. In addition, the upper limit value of the content of the phosphorus-based antioxidant is preferably 5000 mass ppm or less, more preferably 3000 mass ppm or less, even more preferably 2500 mass ppm or less, and still more preferably 1800 mass ppm or less per 100 parts by mass of the composition. Containing the phosphorus-based antioxidant in an amount of the above upper limit value or less tends to more effectively prevent the increase in the YI value of the composition or a cured product of a resin composition.

The composition of the present embodiment may contain only one phosphorus-based antioxidant or may contain two or more phosphorus-based antioxidants. In the composition containing two or more phosphorus-based antioxidants, the total amount is preferably in the above ranges.

In the composition of the present embodiment, a mass ratio of the less hindered phenolic antioxidant to the phosphorus-based antioxidant (less hindered phenolic antioxidant/phosphorus-based antioxidant) is preferably 0.2 or more, more preferably 0.3 or more, even more preferably 0.4 or more, still more preferably 0.6 or more, yet more preferably 0.8 or more, and preferably 3.0 or less, more preferably 1.8 or less, even more preferably 1.4 or less, still more preferably 1.2 or less. Containing the less hindered phenolic antioxidant and the phosphorus-based antioxidant in a mass ratio of the above lower limit value or more and the above upper limit value or less tends to more effectively prevent the increase in the YI value of the composition or a cured product of a resin composition.

In addition, in the composition of the present embodiment, a total amount of the less hindered phenolic antioxidant and the phosphorus-based antioxidant is preferably 500 mass ppm or more, more preferably 900 mass ppm or more, even more preferably 1100 mass ppm or more, and may be 1600 mass ppm or more per 100 parts by mass of the composition. Containing the less hindered phenolic antioxidant and the phosphorus-based antioxidant in a total amount of the above lower limit value or more tends to more effectively prevent the increase in the YI value of the composition or a cured product of a resin composition. In addition, the upper limit value of the content of the phosphorus-based antioxidant is preferably 3000 mass ppm or less, more preferably 2800 mass ppm or less, and even more preferably 2400 mass ppm or less per 100 parts by mass of the composition. Containing the phosphorus-based antioxidant in an amount of the above upper limit value or less tends to more effectively prevent the increase in the YI value of the composition or a cured product of a resin composition.

### Additional Component

The composition of the present embodiment may consist of only the low-molecular-weight compound containing an amino group and a cyclic ether structure and the less hindered phenolic antioxidant or may contain an additional component. Examples of the additional component include a component including a modifying component, such as a plasticizer; a reactive or non-reactive diluent; a flow control component, such as a thixotropic agent; a pigment; and a tackifier; as well as a cissing inhibitor, a leveling agent, an antifoaming agent, an ultraviolet absorber, a light stabilizer, and a curing accelerator.

The composition of the present embodiment is effectively used in various applications in which a low-molecular-weight amine compound is used. Specifically, the composition can be widely used as a curing agent for a thermosetting resin, a raw material for a polyamide resin and other resins, a raw material for an adhesive, and the like. Examples of the use of a curing agent for a thermosetting resin include the use of the composition of the present embodiment instead of curing agents described in WO 2016/158871 and JP 2012-153857.

An example of the composition of the present embodiment is a composition consisting substantially of only the low-molecular-weight compound containing an amino group and a cyclic ether structure and the less hindered phenolic antioxidant. "Substantially" means that the amount of a component other than the low-molecular-weight compound containing an amino group and a cyclic ether structure and the less hindered phenolic antioxidant is 5 mass% or less of the total amount of the low-molecular-weight compound containing an amino group and a cyclic ether structure and the less hindered phenolic antioxidant. The amount is preferably 3 mass% or less, more preferably 1 mass% or less, even more preferably 0.1 mass% or less, still more preferably 0.01 mass% or less, yet more preferably 0.001 mass% or less, and a component other than the low-molecular-weight compound containing an amino group and a cyclic ether structure and the less hindered phenolic antioxidant is particularly even more preferably not proactively blended. Such a composition consisting substantially of the low-molecular-weight compound containing an amino group and a cyclic ether structure and the less hindered phenolic antioxidant is preferably sealed in a state as it is in a container. Such a composition is marketed, for example, as a reagent of a low-molecular-weight compound containing an amino group and a cyclic ether structure.

### Resin Composition

A resin composition of the present embodiment contains the composition of the present embodiment and a thermosetting resin.

The thermosetting resin preferably contains one or more selected from the group consisting of an epoxy resin, a benzoxazine resin, a phenolic resin, an unsaturated polyester resin, a maleimide resin, a thermosetting polyimide resin, and a silicone resin, and more preferably contains an epoxy resin. As for the epoxy resin, reference can be made to a description in paragraph [0036] of WO 2016/158871, the content of which is incorporated in the present specification.

In addition, in the resin composition of the present embodiment, a component and/or an additive can be used according to the application as long as the effects of the present invention are not impaired, the component including a modifying component, such as a filler and/or a plasticizer; a reactive or non-reactive diluent; a flow control component, such as a thixotropic agent; a pigment; and/or a tackifier; as well as the additive, such as a cissing inhibitor, a leveling agent, an antifoaming agent, an ultraviolet absorber, a light stabilizer, and/or a curing accelerator.

The resin composition of the present embodiment can be used in a wide range of applications, such as, for example, paints or adhesives for concrete, cement mortar, various metals, leather, glass, rubber, plastic, wood, cloth, paper, and the like; pressure sensitive adhesives for pressure sensitive adhesive tapes for packaging, pressure sensitive adhesive labels, frozen food labels, removable labels, POS labels, pressure sensitive adhesive wallpapers, and pressure sensitive adhesive flooring materials; processed papers, such as art papers, lightweight coated papers, cast-coated papers, coated paperboards, carbonless copiers, and impregnated papers; fiber treatment agents, such as sizing agents, fray prevention agents, and processing agents for natural fibers, synthetic fibers, glass fibers, carbon fibers, metallic fibers, and the like; and building materials, such as sealants, cement admixtures, and waterproofing materials.

### Cured Product

A cured product of the present embodiment is a cured product of the curable resin composition of the present embodiment.

The form of the cured product may be a film form, a sheet form, or any other form.

### Examples

The present invention will be more specifically described with reference to examples below. Materials, amounts used, proportions, processing details, processing procedures, and the like shown in examples below can be appropriately changed as long as the change does not depart from the spirit of the present invention. Thus, the scope of the present invention is not limited to specific examples shown below.

If a measuring device used in examples is difficult to obtain because of discontinuation or the like, another device with equivalent performance can be used for measurement.

t-Bu represents a t-butyl group.

### 1. Raw Material

### Synthetic Example 1: Synthesis of Compound (H-AMF) Represented by Formula (F1)

In a pressure-resistant autoclave, 20 g of 2,5-bis(aminomethyl)furan (AMF), 8 g of Ru/alumina (Al₂O₃) (the amount of Ru catalyst was 5 mass%) as a catalyst, and 120 mL of tetrahydrofuran (THF) as a solvent were placed, and then hydrogen pressure was increased to 6 MPaG. The mixture was reacted with temperature maintained at 90°C for 1 hour, and the pressure-resistant autoclave was cooled with ice-water to stop the reaction. Under an argon gas stream, the catalyst was removed by filtering the catalyst and the reaction solution, and a filtrate containing a product was obtained. The filtrate was post-concentrated, vacuum-dried, and purified by distillation under reduced pressure at a temperature of 120°C and a pressure of 1 mbar.

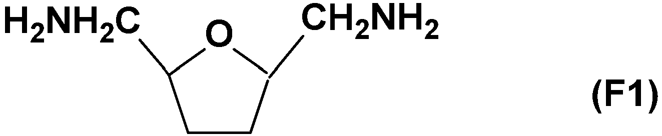

### Comparative Diamine

### 1,3-BAC: 1,3-bis(aminomethyl)cyclohexane, available from Mitsubishi Gas Chemical Company, Inc.

### Antioxidant

### AO-30: ADEKA STAB, less hindered phenolic antioxidant, available from ADEKA Corporation

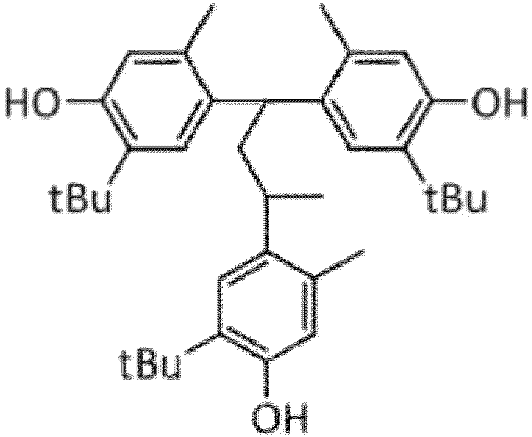

### AO-40: ADEKA STAB, less hindered phenolic antioxidant, available from ADEKA Corporation

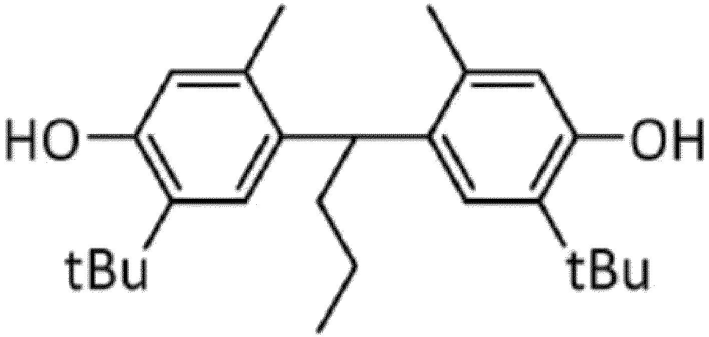

### AO-50: ADEKA STAB AO-50, hindered phenolic antioxidant, available from ADEKA Corporation

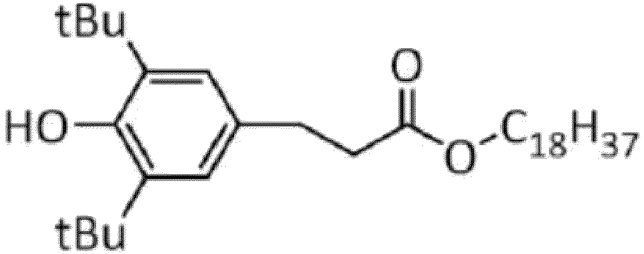

### AO-60: ADEKA STAB AO-60, hindered phenolic antioxidant, available from ADEKA Corporation

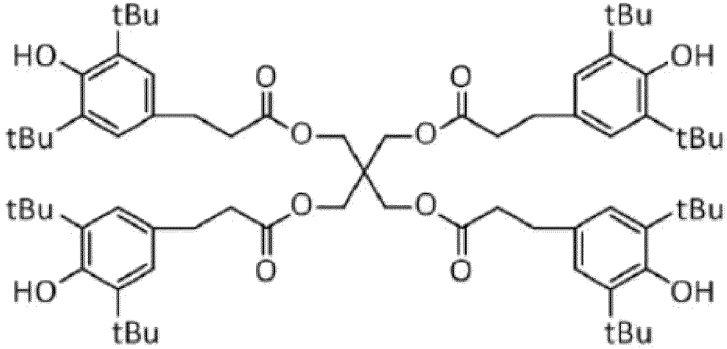

### Phosphorus-based oxidizing agent: ADEKA STAB 2112, available from ADEKA Corporation

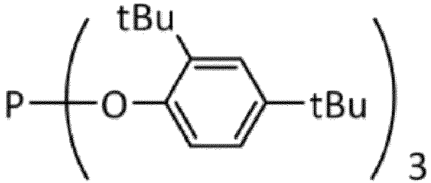

### Example 1

Composition 1 was obtained by blending 100 parts by mass of H-AMF above with 1000 mass ppm of a less hindered amine-based antioxidant (A-30) as diamine without blending with the phosphorus-based antioxidant.

The resulting composition was heated at 160°C for 30 minutes, and a YI value of the composition cooled to room temperature by air cooling after heating was measured. The YI value was measured using a spectral haze meter SH-7000 available from Nippon Denshoku Industries Co., Ltd.

Furthermore, a composition of Reference Example 1 (a composition containing only H-AMF and not blended with the phosphorus-based antioxidant or a less hindered amine-based antioxidant) was also heated at 160°C for 30 minutes in the same manner, and the YI value after heating was measured.

A difference (ΔYI) between the YI value of Composition 1 above and the YI value of the composition of Reference Example 1 was -5.3; the YI value of Composition 1 was significantly lower than that of the composition of Reference Example 1.

### Example 2

Composition 2 was obtained in the same manner as in Example 1 except for changing the content of the less hindered amine-based antioxidant (A-30) to 1500 mass ppm.

A ΔYI value obtained in the same manner as in Example 1 except for changing Composition 1 to Composition 2 was -4.3; the YI value of Composition 2 was significantly lower than that of the composition of Reference Example 1.

### Example 3

Composition 3 was obtained in the same manner as in Example 1 except for changing the content of the less hindered amine-based antioxidant (A-30) to 2000 mass ppm.

A ΔYI value obtained in the same manner as in Example 1 except for changing Composition 1 to Composition 3 was -2.6; the YI value of Composition 3 was significantly lower than that of the composition of Reference Example 1.

### Example 4

Composition 4 was obtained in the same manner as in Example 1 except for changing the type of less hindered amine-based antioxidant from ADEKA STAB A-30 to ADEKA STAB AO-40.

A ΔYI value obtained in the same manner as in Example 1 except for changing Composition 1 to Composition 4 was -5.0; the YI value of Composition 4 was significantly lower than that of the composition of Reference Example 1.

### Example 5

Composition 5 was obtained in the same manner as in Example 4 except for changing the content of the less hindered amine-based antioxidant (A-40) to 1500 mass ppm.

A ΔYI value obtained in the same manner as Example 4 except for changing Composition 4 to Composition 5 was -3.5; the **YI** value of Composition 5 was significantly lower than that of the composition of Reference Example 1.

### Example 6

Composition 6 was obtained in the same manner as in Example 4 except for changing the content of the less hindered amine-based antioxidant (A-40) to 2000 mass ppm.

A ΔYI value obtained in the same manner as in Example 4 except for changing Composition 4 to Composition 6 was -3.0; the YI value of Composition 6 was significantly lower than that of the composition of Reference Example 1.

### Example 7

Composition 7 was obtained in the same manner as in Example 1 except for further blending with 500 mass ppm of the phosphorus-based antioxidant in Composition 1.

A ΔYI value obtained in the same manner as in Example 1 except for changing Composition 1 to Composition 7 was -5.7; the YI value of Composition 7 was significantly lower than that of the composition of Reference Example 1.

### Example 8

Composition 8 was obtained in the same manner as in Example 2 except for further blending with 500 mass ppm of the phosphorus-based antioxidant in Composition 2.

A ΔYI value obtained in the same manner as in Example 2 except for changing Composition 2 to Composition 8 was -4.9; the YI value of Composition 8 was significantly lower than that of the composition of Reference Example 1.

### Example 9

Composition 9 was obtained in the same manner as in Example 4 except for further blending with 500 mass ppm of the phosphorus-based antioxidant in Composition 4.

A ΔYI value obtained in the same manner as in Example 4 except for changing Composition 4 to Composition 9 was -5.0; the YI value of Composition 9 was significantly lower than that of the composition of Reference Example 1.

### Example 10

Composition 10 was obtained in the same manner as in Example 5 except for further blending with 500 mass ppm of the phosphorus-based antioxidant in Composition 5.

A ΔYI value obtained in the same manner as in Example 5 except for changing Composition 5 to Composition 10 was -5.5; the YI value of Composition 10 was significantly lower than that of the composition of Reference Example 1.

### Example 11

Composition 11 was obtained in the same manner as in Example 1 except for changing the content of the less hindered amine-based antioxidant (A-30) to 500 mass ppm and further blending with 1000 mass ppm of the phosphorus-based antioxidant.

A ΔYI value obtained in the same manner as in Example 1 except for changing Composition 1 to Composition 11 was -5.2; the YI value of Composition 11 was significantly lower than that of the composition of Reference Example 1.

### Example 12

Composition 12 was obtained in the same manner as in Example 1 except for further blending with 1000 mass ppm of the phosphorus-based antioxidant.

A ΔYI value obtained in the same manner as in Example 1 except for changing Composition 1 to Composition 12 was -7.4; the YI value of Composition 12 was significantly lower than that of the composition of Reference Example 1.

### Example 13

Composition 13 was obtained in the same manner as in Example 4 except for changing the content of the less hindered amine-based antioxidant (A-40) to 500 mass ppm and further blending with 1000 mass ppm of the phosphorus-based antioxidant in Composition 4.

A ΔYI value obtained in the same manner as in Example 4 except for changing Composition 4 to Composition 13 was -6.3; the YI value of Composition 13 was significantly lower than that of the composition of Reference Example 1.

### Example 14

Composition 14 was obtained in the same manner as in Example 4 except for further changing the content of the phosphorus-based antioxidant to 1000 mass ppm in Composition 4.

A ΔYI value obtained in the same manner as in Example 4 except for changing Composition 4 to Composition 14 was -7.6; the YI value of Composition 14 was significantly lower than that of the composition of Reference Example 1.

### Example 15

Composition 15 was obtained in the same manner as in Example 11 except for changing the content of the phosphorus-based antioxidant to 1500 mass ppm.

A ΔYI value obtained in the same manner as in Example 11 except for changing Composition 14 to Composition 15 was -6.2; the YI value of Composition 15 was significantly lower than that of the composition of Reference Example 1.

### Example 16

Composition 16 was obtained in the same manner as in Example 13 except for changing the content of the phosphorus-based antioxidant to 1500 mass ppm.

A ΔYI value obtained in the same manner as in Example 13 except for changing Composition 13 to Composition 16 was -6.5; the YI value of Composition 16 was significantly lower than that of the composition of Reference Example 1.

### Comparative Example 1

Comparative Composition 1 was obtained by blending 100 parts by mass of 1,3-BAC above with a less hindered amine-based antioxidant (A-30, 2000 mass ppm) as diamine without blending with the phosphorus-based antioxidant.

The resulting Comparative Composition 1 was heated at 160°C for 30 minutes, and a YI value after heating was measured.

Furthermore, a composition of Reference Example 2 (a composition containing only 1,3-BAC and not blended with the phosphorus-based antioxidant or a less hindered amine-based antioxidant) was also heated at 160°C for 30 minutes in the same manner, and the YI value after heating was measured.

A difference (ΔYI) between the YI value of Comparative Composition 1 above and the YI value of the composition of Reference Example 2 was 1.9; the YI value of Comparative Composition 1 was higher than that of the composition of Reference Example 2.

### Comparative Example 2

Comparative Composition 2 was obtained in the same manner as in Comparative Example 1 except for performing the less hindered amine-based antioxidant (A-30, 2000 mass ppm) on a less hindered amine-based antioxidant (A-40, 2000 mass ppm).

A ΔYI value obtained in the same manner as in Comparative Example 1 except for changing Comparative Composition 1 to Comparative Composition 2 was 4.8; the YI value of Comparative Composition 2 was significantly higher than that of the composition of Reference Example 2.

Examples, Comparative Examples, and Reference Examples are summarized in Tables 1 and 2 below.

**[Table 1]**

| | | Example 1 | Example 2 | Example 3 | Example 4 | Example 5 | Example 6 | Comparative Example 1 | Comparative Example 2 | Reference Example 1 | Reference Example 2 |
|---|---|---|---|---|---|---|---|---|---|---|---|
| Diamine | | H-AMF | H-AMF | H-AMF | H-AMF | H-AMF | H-AMF | 1,3-BAC | 1,3-BAC | H-AMF | 1,3-BAC |
| Phenolic antioxidant (ppm) | AO30 | 1000 | 1500 | 2000 | | | | 2000 | | - | - |
| | AO40 | | | | 1000 | 1500 | 2000 | | 2000 | - | - |
| ΔYI | | -5.3 | -4.3 | -2.6 | -5.0 | -3.5 | -3.0 | 1.9 | 4.8 | 0 | 0 |

**[Table 2]**

| | | Example 7 | Example 8 | Example 9 | Example 10 | Example 11 | Example 12 | Example 13 | Example 14 | Example 15 | Example 16 |
|---|---|---|---|---|---|---|---|---|---|---|---|
| Diamine | | H-AMF | H-AMF | H-AMF | H-AMF | H-AMF | H-AMF | H-AMF | H-AMF | H-AMF | H-AMF |
| Phenolic antioxidant (ppm) | AO30 | 1000 | 1500 | | | 500 | 1000 | | | 500 | |
| | AO40 | | | 1000 | 1500 | | | 500 | 1000 | | 500 |
| Phosphorus-based antioxidant (ppm) | 2112 | 500 | 500 | 500 | 500 | 1000 | 1000 | 1000 | 1000 | 1500 | 1500 |
| ΔYI | | -5.7 | -4.9 | -5.0 | -5.5 | -5.2 | -7.4 | -6.3 | -7.6 | -6.2 | -6.5 |

As is clear from the above results, in the present invention, blending the low-molecular-weight compound containing an amino group and a cyclic ether structure with the less hindered phenolic antioxidant effectively prevented yellowing of the composition.

In contrast to this, as shown in Comparative Examples 1 and 2, for the low-molecular-weight compound containing an amino group and a cyclic alkyl structure, even blending with the less hindered phenolic antioxidant failed to prevent yellowing of the composition at all.

Furthermore, obtaining the composition in the same manner as in Example 1 except for changing the less hindered phenolic antioxidant to a similar widely-used hindered phenolic antioxidant AO-60 (ADEKA STAB AO-60, available from ADEKA Corporation) failed to prevent yellowing of the composition at all. In addition, even obtaining the composition in the same manner as in Example 1 except for changing the less hindered phenolic antioxidant to AO-50 (ADEKA STAB AO-50, available from ADEKA Corporation) which is a widely-used hindered phenolic antioxidant failed to prevent yellowing of the composition at all.

That is, the results found that the less hindered phenolic antioxidant is specifically useful for preventing oxidation of the low-molecular-weight compound containing an amino group and a cyclic ether structure.

## Claims

1. A composition comprising;
a compound comprising an amino group and a cyclic ether structure and having a molecular weight of 1000 or less; and
a less hindered phenolic antioxidant.

2. The composition according to claim 1, wherein the compound comprising an amino group and a cyclic ether structure and having a molecular weight of 1000 or less is represented by Formula (F); 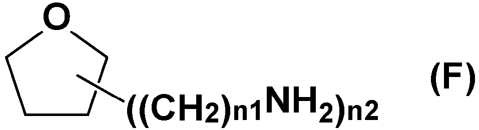 where in Formula (F), n1 represents an integer of 0 to 3, and n2 represents an integer of 1 to 4.

3. The composition according to claim 1 or 2, further comprising a phosphorus-based antioxidant.

4. The composition according to claim 3, wherein a mass ratio of the less hindered phenolic antioxidant to the phosphorus-based antioxidant (less hindered phenolic antioxidant/phosphorus-based antioxidant) is from 0.6 to 1.4.

5. The composition according to any one of claims 1 to 4, wherein a content of the less hindered phenolic antioxidant is from 100 to 5000 mass ppm.

6. The composition according to claim 1, further comprising a phosphorus-based antioxidant, wherein
a mass ratio of the less hindered phenolic antioxidant to the phosphorus-based antioxidant (less hindered phenolic antioxidant/phosphorus-based antioxidant) is from 0.6 to 1.4, and
a content of the less hindered phenolic antioxidant is from 100 to 5000 mass ppm.

7. A resin composition comprising:
the composition described in any one of claims 1 to 6; and
a thermosetting resin.

8. The resin composition according to claim 7, wherein the thermosetting resin comprises an epoxy resin.

9. A cured product of the resin composition described in claim 7 or 8.
